# EUROPEAN PATENT APPLICATION

(11) **EP 4 418 169 A1**
(43) Date of publication of application: **21.08.2024**
(21) Application number: 24157221.3
(22) Date of filing: 13.02.2024
(51) Int. Cl.: G06N 20/00, H04W 24/02

(54) **STRUCTURE OF ML MODEL INFORMATION AND ITS USAGE**

(30) Priority: 17.02.2023 FI 20235204
(71) Applicant: Nokia Technologies Oy, 02610 Espoo (FI)
(72) Inventor: GOLD, Dimitri, Espoo (FI); ALI, Amaanat, Espoo (FI); LADDU, Keeth Saliya Jayasinghe, Espoo (FI); ENESCU, Mihai, Espoo (FI); HASSAN, Sakira, Espoo (FI)
(74) Representative: Nokia EPO representatives

(57) **Abstract**

Method comprising:
receiving a request to validate a machine learning model, wherein the request comprises a data structure of the machine learning model and an indication of a current condition under which inference by the machine learning model is to be executed;
validating the machine learning model based on the data structure and the current condition to obtain a validation result; and
providing the validation result in response to the request to validate the machine learning model, wherein the data structure of the machine learning model comprises at least one of metadata of the machine learning model or context data of the machine learning model.

## Description

### Technical Field

The present disclosure relates to ML models.

### Abbreviations

- 3GPP: 3^{rd} Generation Partnership Project
- 5G/6G/7G: 5^{th}/6^{th}/7^{th} Generation
- AI: Artificial Intelligence
- AMF: Application Management Function
- CSI: Channel State Information
- HW: HardWare
- GDPR: General Data Protection Regulation
- FR1/2: Frequency Range 1/2
- FO: Frequency Offset
- ID: Identifier
- LCM: Life Cycle Management
- MIMO: Multiple Input Multiple Output
- ML: Machine Learning
- MLDB: ML External Third-party/Operator Data Base
- NR: New Radio
- NW: NetWork
- (R)AN: (Radio) Access Network
- RSRP: Reference Signal Received Power
- RSRQ: Reference Signal Received Quality
- RRC: Radio Resource Control
- ONNI: Open Neural Network Exchange
- SOC: System ON Chip
- TO: Time Offset
- UF: Use case Feature
- UE: User Equipment
- UMi: Urban Micro (channel model)
- UMLCMF: UE ML Capability Management Function

- XML: Extensible Markup Language

### Terminology

| **Terminology** | **Description** |
|---|---|
| Data collection | A process of collecting data by the network nodes, management entity, or UE for the purpose of AI/ML model training, data analytics and inference |
| AI/ML Model | A data driven algorithm that applies AI/ML techniques to generate a set of outputs based on a set of inputs. |
| AI/ML model training | A process to train an AI/ML Model [by learning the input/output relationship] in a data driven manner and obtain the trained AI/ML Model for inference |
| AI/ML model Inference | A process of using a trained AI/ML model to produce a set of outputs based on a set of inputs |
| AI/ML model validation | A subprocess of training, to evaluate the quality of an AI/ML model using a dataset different from one used for model training, that helps selecting model parameters that generalize beyond the dataset used for model training. |
| AI/ML model testing | A subprocess of training, to evaluate the performance of a final AI/ML model using a dataset different from one used for model training and validation. Different from AI/ML model validation, testing does not assume subsequent tuning of the model. |
| UE-side (AI/ML) model | An AI/ML Model whose inference is performed entirely at the UE |
| Network-side (AI/ML) model | An AI/ML Model whose inference is performed entirely at the network |
| One-sided (AI/ML) model | A UE-side (AI/ML) model or a Network-side (AI/ML) model |
| Two-sided (AI/ML) model | A paired AI/ML Model(s) over which joint inference is performed, where joint inference comprises AI/ML Inference whose inference is performed jointly across the UE and the network, i.e, the first part of inference is firstly performed by UE and then the remaining part is performed by gNB, or vice versa. |
| AI/ML model transfer | Delivery of an AI/ML model over the air interface, either parameters of a model structure known at the receiving end or a new model with parameters. Delivery may contain a full model or a partial model. |
| Model download | Model transfer from the network to UE |
| Model upload | Model transfer from UE to the network |
| Federated learning / federated training | A machine learning technique that trains an AI/ML model across multiple decentralized edge nodes (e.g., UEs, gNBs) each performing local model training using local data samples. The technique requires multiple interactions of the model, but no exchange of local data samples. |
| Offline field data | The data collected from field and used for offline training of the AI/ML model |
| Online field data | The data collected from field and used for online training of the AI/ML model |
| Model monitoring | A procedure that monitors the inference performance of the AI/ML model |
| Supervised learning | A process of training a model from input and its corresponding *labels.* |
| Unsupervised learning | A process of training a model without labelled data. |
| Semi-supervised learning | A process of training a model with a mix of labelled data and unlabelled data |
| Reinforcement Learning (RL) | A process of training an AI/ML model from input (a.k.a. state) and a feedback signal (a.k.a. reward) resulting from the model's output (a.k.a. action) in an environment the model is interacting with. |
| Model activation | enable an AI/ML model for a specific function |
| Model deactivation | disable an AI/ML model for a specific function |
| Model switching | Deactivating a currently active AI/ML model and activating a different AI/ML model for a specific function |

### Background

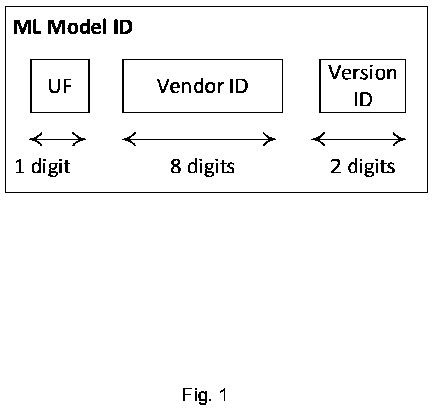

As shown in Fig. 1, the ML Model Identifier (ID) may conventionally have the following example fields:
UF (Use case Feature): A Use Case specific information which encompasses the functionality of the ML model (e.g., beam management, CSI compression, positioning, mobility enhancement, power saving, etc.). Its length may be 1 hexadecimal digit.

Vendor ID: The Vendor ID is an identifier of manufacturer. For the UEs, this is defined by a value of Private Enterprise Number issued by Internet Assigned Numbers Authority (IANA) in its capacity as the private enterprise number administrator, as maintained at https://www.iana.org/assignments/enterprise-numbers/enterprise-numbers. Its length may be 8 hexadecimal digits.

**Version ID:** The Version ID is the current Version ID configured in the UE ML Capability Management Function (UMLCMF), or defined by the UE, or received from ML External Third-party/Operator Data Base (MLDB). Its length may be 2 hexadecimal digits.

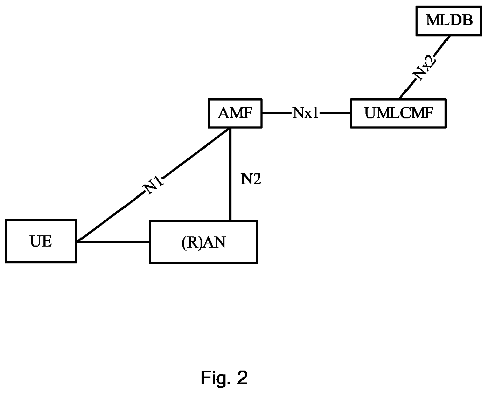

Fig. 2 shows an example of AI/ML capability signalling architecture. UE, RAN (incl. gNB or another base station), and AMF are interconnected. AMF is connected to UMLCMF via Nx1 interface. UMLCMF may access a database (MLDB) storing information on ML models via Nx2 interface.

The UMLCMF stores all the ML-Model-ID(s) with at least one of the following:
a) ML model info/context/meta-data (that at least indicates high-level details of a model (architecture, number of layers) and applicable radio conditions, configuration, and parameters under which the model has been trained); or
b) ML model data pertaining to the UE(s). They may be stored for different manufacturers and different versions and functions.

The UMLCMF uses the Nx2 interface linking itself to the MLDB whereby the operator has control on which ML-Model-ID(s) can be deployed (as they are validated) to be taken into use in the given network for a specific use case/functionality (e.g., CSI compression).

The UMLCMF is a logical entity and, in some implementations, it may be co-located with the AMF.

### Summary

It is an object to improve the prior art.

According to a first aspect, there is provided apparatus comprising:
at least one processor; and
at least one memory storing instructions that, when executed by the at least one processor, cause the apparatus at least to perform:
   collecting at least one of utilization conditions or statistics on performance of an inference of a machine learning model;
   updating at least a first piece of information of a data structure of the machine learning model based on at least one of the collected utilization conditions or the collected statistics; and
   providing the at least first piece of information to at least one of a database or a terminal after the at least first piece of information has been updated, wherein
   the data structure of the machine learning model comprises at least one of metadata of the machine learning model or context data of the machine learning model.

The instructions, when executed by the at least one processor, may further cause the apparatus to perform
checking whether a second piece of information different from the first piece of information has been updated; and
inhibiting providing the second piece of information to the at least one of the database or the terminal in response to checking that the second piece of information has not been updated.

The instructions, when executed by the at least one processor, may further cause the apparatus to perform at least one of the following:
providing the first piece of information to the database with a first periodicity; or
providing the second piece of information to the database with a second periodicity.

The instructions, when executed by the at least one processor, may further cause the apparatus to perform at least one of the following:
receiving a request to provide at least the first piece of information to the database; or
providing the at least first piece of information of the data structure in response to receiving the request.

The instructions, when executed by the at least one processor, may further cause the apparatus to perform
receiving at least one of an intermediate of the machine learning model, a machine learning model prediction, and a measurement result from a terminal instructed to execute inference by the machine learning model; and
generating the at least one of the utilization conditions or statistics on performance of the inference of the machine learning model based on the received at least one of the intermediate of the machine learning model, the machine learning model prediction, and the measurement result.

The instructions, when executed by the at least one processor, may further cause the apparatus to perform
encrypting the first piece of information prior to providing the first piece of information to the terminal.

The instructions, when executed by the at least one processor, may further cause the apparatus to perform
checking if the terminal is of a same vendor as the apparatus; and
inhibiting the providing the first piece of information to the terminal in response to checking that the terminal is not of the same vendor as the apparatus.

According to a second aspect, there is provided an apparatus comprising:
at least one processor; and
at least one memory storing instructions that, when executed by the at least one processor, cause the apparatus at least to perform:
   receiving a request to validate a machine learning model, wherein the request comprises a data structure of the machine learning model and an indication of a current condition under which inference by the machine learning model is to be executed;
   validating the machine learning model based on the data structure and the current condition to obtain a validation result; and
   providing the validation result in response to the request to validate the machine learning model, wherein
   the data structure of the machine learning model comprises at least one of metadata of the machine learning model or context data of the machine learning model.

The instructions, when executed by the at least one processor, may cause the apparatus to perform
the validating without using the machine learning model.

The instructions, when executed by the at least one processor, may further cause the apparatus to perform
providing at least one of an update of the data structure or an update of the machine learning model in response to the request to validate the machine learning model.

According to a third aspect, there is provided an apparatus comprising:
at least one processor; and
at least one memory storing instructions that, when executed by the at least one processor, cause the apparatus at least to perform:
   sending a request to validate a machine learning model, wherein the request comprises a data structure of the machine learning model and an indication of a current condition under which inference by the machine learning model is to be executed;
   receiving a validation result in response to the request to validate; and
   deciding whether or not to perform inference by the machine learning model based on the validation result, wherein
   the data structure of the machine learning model comprises at least one of metadata of the machine learning model or context data of the machine learning model.

The instructions, when executed by the at least one processor, may further cause the apparatus to perform
inhibiting sending the machine learning model along with the data structure in the request to validate the machine learning model.

The instructions, when executed by the at least one processor, may further cause the apparatus to perform
receiving at least one of an update of the data structure or an update of the machine learning model in response to the request to validate the machine learning model;
updating the at least one of the data structure and the machine learning model based on the received update; and
performing the inference by the machine learning model based on the updated at least one of the data structure and the machine learning model.

The instructions, when executed by the at least one processor, may further cause the apparatus to perform at least one of the following:
performing the inference by the machine learning model in response to deciding that, based on the validation result, the inference by the machine learning model is to be performed; or
inhibiting the performing the inference by the machine learning model in response to deciding that, based on the validation result, the inference by the machine learning model is not to be performed.

According to a fourth aspect, there is provided an apparatus comprising:
at least one processor; and
at least one memory storing instructions that, when executed by the at least one processor, cause the apparatus at least to perform:
   monitoring a current condition under which inference by a machine learning model is performed or is to be performed;
   validating the machine learning model based on a data structure of the machine learning model and the current condition to obtain a validation result; and
   deciding whether or not to perform the inference by the machine learning model based on the validation result, wherein
   the data structure of the machine learning model comprises at least one of metadata of the machine learning model or context data of the machine learning model.

The instructions, when executed by the at least one processor, may cause the apparatus to perform
the validating without using the machine learning model.

The instructions, when executed by the at least one processor, may further cause the apparatus to perform
updating the at least one of the data structure or the machine learning model based on the received update; and
performing the inference by the machine learning model based on the updated at least one of the data structure or the machine learning model.

The instructions, when executed by the at least one processor, may further cause the apparatus to perform at least one of the following:
performing the inference by the machine learning model in response to deciding that, based on the validation result, the inference by the machine learning model is to be performed; or
inhibiting the performing the inference by the machine learning model in response to deciding that, based on the validation result, the inference by the machine learning model is not to be performed.

The instructions, when executed by the at least one processor, may further cause the apparatus to perform, in response to deciding that, based on the validation result, the inference by the machine learning model is not to be performed, at least one of the following:
performing the inference by another machine learning model;
updating the machine learning model; or
switching to a fallback mechanism instead of the performing the inference by the machine learning model.

According to a fifth aspect, there is provided a method comprising:
collecting at least one of utilization conditions or statistics on performance of an inference of a machine learning model;
updating at least a first piece of information of a data structure of the machine learning model based on at least one of the collected utilization conditions or the collected statistics; and
providing the at least first piece of information to at least one of a database or a terminal after the at least first piece of information has been updated, wherein
the data structure of the machine learning model comprises at least one of metadata of the machine learning model or context data of the machine learning model.

The method may further comprise
checking whether a second piece of information different from the first piece of information has been updated; and
inhibiting providing the second piece of information to the at least one of the database or the terminal in response to checking that the second piece of information has not been updated.

The method may further comprise at least one of the following:
providing the first piece of information to the database with a first periodicity; or
providing the second piece of information to the database with a second periodicity.

The method may further comprise at least one of the following:
receiving a request to provide at least the first piece of information to the database; or
providing the at least first piece of information of the data structure in response to receiving the request.

The method may further comprise
receiving at least one of an intermediate of the machine learning model, a machine learning model prediction, and a measurement result from a terminal instructed to execute inference by the machine learning model; and
generating the at least one of the utilization conditions or statistics on performance of the inference of the machine learning model based on the received at least one of the intermediate of the machine learning model, the machine learning model prediction, and the measurement result.

The method may further comprise
encrypting the first piece of information prior to providing the first piece of information to the terminal.

The method may further comprise
checking if the terminal is of a same vendor as the method; and
inhibiting the providing the first piece of information to the terminal in response to checking that the terminal is not of the same vendor as the method.

According to a sixth aspect, there is provided a method comprising:
receiving a request to validate a machine learning model, wherein the request comprises a data structure of the machine learning model and an indication of a current condition under which inference by the machine learning model is to be executed;
validating the machine learning model based on the data structure and the current condition to obtain a validation result; and
providing the validation result in response to the request to validate the machine learning model, wherein
the data structure of the machine learning model comprises at least one of metadata of the machine learning model or context data of the machine learning model.

The validating may be performed without using the machine learning model.

The method may further comprise
providing at least one of an update of the data structure or an update of the machine learning model in response to the request to validate the machine learning model.

According to a seventh aspect, there is provided a method comprising:
sending a request to validate a machine learning model, wherein the request comprises a data structure of the machine learning model and an indication of a current condition under which inference by the machine learning model is to be executed;
receiving a validation result in response to the request to validate; and
deciding whether or not to perform inference by the machine learning model based on the validation result, wherein
the data structure of the machine learning model comprises at least one of metadata of the machine learning model or context data of the machine learning model.

The method may further comprise
inhibiting sending the machine learning model along with the data structure in the request to validate the machine learning model.

The method may further comprise
receiving at least one of an update of the data structure or an update of the machine learning model in response to the request to validate the machine learning model;
updating the at least one of the data structure and the machine learning model based on the received update; and
performing the inference by the machine learning model based on the updated at least one of the data structure and the machine learning model.

The method may further comprise at least one of the following:
performing the inference by the machine learning model in response to deciding that, based on the validation result, the inference by the machine learning model is to be performed; or
inhibiting the performing the inference by the machine learning model in response to deciding that, based on the validation result, the inference by the machine learning model is not to be performed.

According to an eighth aspect, there is provided a method comprising:
monitoring a current condition under which inference by a machine learning model is performed or is to be performed;
validating the machine learning model based on a data structure of the machine learning model and the current condition to obtain a validation result; and
deciding whether or not to perform the inference by the machine learning model based on the validation result, wherein
the data structure of the machine learning model comprises at least one of metadata of the machine learning model or context data of the machine learning model.

The validating may be performed without using the machine learning model.

The method may further comprise
updating the at least one of the data structure or the machine learning model based on the received update; and
performing the inference by the machine learning model based on the updated at least one of the data structure or the machine learning model.

The method may further comprise at least one of the following:
performing the inference by the machine learning model in response to deciding that, based on the validation result, the inference by the machine learning model is to be performed; or
inhibiting the performing the inference by the machine learning model in response to deciding that, based on the validation result, the inference by the machine learning model is not to be performed.

The method may further comprise at least one of the following:
performing the inference by another machine learning model in response to deciding that, based on the validation result, the inference by the machine learning model is not to be performed;
updating the machine learning model in response to deciding that, based on the validation result, the inference by the machine learning model is not to be performed; or
switching to a fallback mechanism instead of the performing the inference by the machine learning model in response to deciding that, based on the validation result, the inference by the machine learning model is not to be performed.

The method of each of the fifth to eighth aspects may be a method of using machine learning model information.

According to each of the first to eighth aspects, the data structure of the machine learning model may comprise
an identifier of a machine learning model, and at least one of the following:
   - static information on the machine learning model;
   - dynamic information on the machine learning model; or
   - secure information on the machine learning model; wherein
the static information comprises at least one of the following:
   - an indication of an architecture of the machine learning model;
   - a number of layers of the machine learning model;
   - an optimizer used to derive the machine learning model;
   - an indication if the machine learning model is one-sided or two-sided;
   - a format of the machine learning model;
   - an indication on a condition under which the machine learning model was trained;
   - an indication of training data used to train the machine learning model;
   - a structure of the training data used to train the machine learning model; or
   - a geographical location at which the machine learning model was trained;
the dynamic information comprises at least one of the following:
   - the indication on the condition under which the machine learning model was trained;
   - the indication of the training data used to train the machine learning model;
   - the structure of the training data used to train the machine learning model; or
   - the geographical location at which the machine learning model was trained;
the secure information comprises at least one of the following:
   - a usage experience of the machine learning model; or
   - a dependence of the user experience on a hardware or a chipset or a system on chip.

The condition under which the machine learning model was trained may comprise at least one of the following: a network at which the machine learning model was trained; a radio parameter under which the machine learning model was trained; a radio condition under which the machine learning model was trained; or a parameter of a terminal under which the machine learning model was trained.

The structure of the training data used to train the machine learning model may comprise at least one of the following: an input parameter of the machine learning model; a range of values of the input parameter in the training data; or a distribution of the values of the input parameter in the training data.

The secure information may be encrypted in the data structure. The first piece of information according to any of the first and fifth aspects may belong to the dynamic information.

According to a ninth aspect, there is provided a computer program product comprising a set of instructions which, when executed on an apparatus, is configured to cause the apparatus to carry out the method according to any of the fifth to eighth aspects. The computer program product may be embodied as a computer-readable medium or directly loadable into a computer.

According to some example embodiments, at least one of the following advantages may be achieved:
- Data volume to be signaled may be reduced as those ML models that do not perform well can be tracked and ensured not to be transferred to some UE(s), such as UEs having entered the network only recently;
- Proactive ML model update/verification/validation is enabled that allows 3GPP network to keep track of ML model usage in the UE, keep track of updates to ML model, and record performance information to ensure that ML model can be taken into usage at UE and network in a reliable manner.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred example embodiments which is to be taken in conjunction with the appended drawings, wherein:
Fig. 1 shows an example of a ML model ID format;
Fig. 2 shows an example of a signaling architecture for AI/ML capability;
Fig. 3 shows an illustration of machine life cycle management of framework and different validation stages (highlighted with dotted arrows).
Fig. 4 shows an example of an extension of ML model ID with ML model Info according to some example embodiments;
Fig. 5 shows an example of an extension of ML model ID with ML model Info according to some example embodiments;
Fig. 6 shows an example of an extension of ML model Info according to some example embodiments;
Fig. 7 shows a message flow according to some example embodiments;
Fig. 8 shows a message flow according to some example embodiments;
Fig. 9 shows a message flow according to some example embodiments;
Fig. 10 shows a message flow according to some example embodiments;
Fig. 11 shows an apparatus according to an example embodiment;
Fig. 12 shows a method according to an example embodiment;
Fig. 13 shows an apparatus according to an example embodiment;
Fig. 14 shows a method according to an example embodiment;
Fig. 15 shows an apparatus according to an example embodiment;
Fig. 16 shows a method according to an example embodiment;
Fig. 17 shows an apparatus according to an example embodiment;
Fig. 18 shows a method according to an example embodiment; and
Fig. 19 shows an apparatus according to an example embodiment.

### Detailed description of certain embodiments

Herein below, certain example embodiments are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

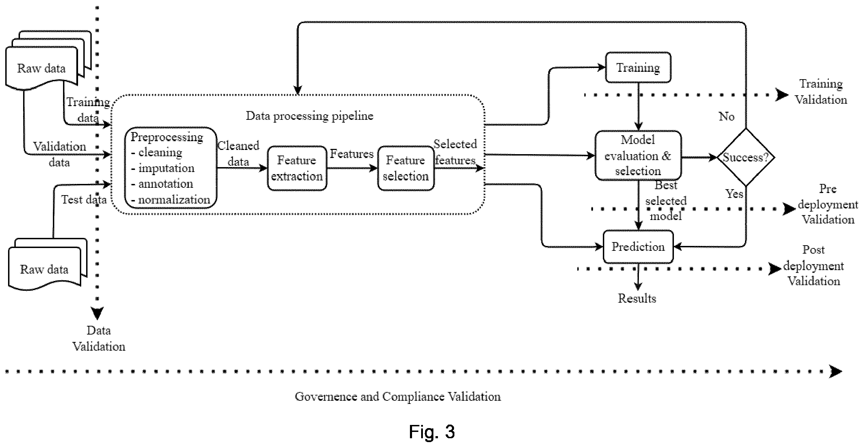

The validation in machine learning is not similar to traditional testing and validation (e.g., unit test, integration test). Since AI/ML models are data-driven and the nature is, in general, probabilistic, it is important to include validation of both data and the model itself. During the life cycle of an AI/ML model, there are several stages, where the following validation aspects may be considered (marked by dotted arrows in Fig. 3):
- ML data validation
- Training validation
- Pre-deployment validation
- Post-deployment validation
- Governance & compliance validation

Fig. 3 gives an example of ML Life Cycle Management (LCM) framework and some important validation stages are highlighted. Since an AI/ML model learns from the data, it is important to provide high quality data, and therefore, data validation is needed. After training, the training validation is required to examine whether further retraining is necessary. Examples include hyperparameter optimization, cross-validation. Model retraining is, in general, performed when the performance of the model is not satisfactory and/or additional domain adaptation is required. After selecting the best model, pre-deployment validation may be performed, which verifies the model's behaviour and performance given some constraints. For example, one may compare the model's behaviour and performance with a baseline model, checking the robustness and explainable characteristics. In post-deployment validation, model's adaptability is verified, which may trigger replacement or update of the model. Along the process of model training and deployment in production, it is important to ensure that the whole process is complying with government regulation and fairness. This validation may include regulations such as GDPR, company/government AI/ML compliance policy requirements and company values.

The data and environment characterized by an AI/ML model are frequently changing over time. This is particularly true for variable and stochastic environments such as wireless networks which combinatorically result in millions of possible deployment scenarios (e.g., a combination of inter-site distance, number of antenna sectors, MIMO antenna configurations, different UE movement speeds and terrain). The model demonstrating correct validation results in the initial test(s) or in the current conditions may produce wrong results in the future, simply because it is practically impossible to train and test all these combinations in one go. The effort may not be worth the time nor the money.

There are different approaches for the model design and training. Some of the AI/ML models can be created to be **as generic as possible** to cater to a variety of deployment scenarios. Therefore, their training data set shall reflect the variability of input conditions, e.g., channel conditions, propagation environments, network parameters and UE capabilities. As explained above, even in this case, it is impossible to envision the situation when the model is used in the conditions (with input data) that it is was not designed for. As an example, this may happen when the UE is roaming out of its home PLMN area into another area where the circumstances are creating an incompatibility for ML operation.

Another approach is to **train (several) more specialized model(s)** and use them interchangeably depending on the conditions and parameters of the environment. However, the input data space for each of such models is limited, and if the inputs of the model go out of the training/verification data space, regardless of model generalization capabilities, model prediction quality may degrade. Hence, in both cases, if the training data cannot or poorly represent the experienced conditions, it can be expected that the model will provide poor predictions (garbage in - garbage out in the worst case). **(1)** *How to avoid a mismatch of training dataset and model input and also to avoid the use of non-compatible models?*

One solution is to perform something called "model monitoring". This act refers to the network utilizing monitor model quality indicators or the corresponding functionality performance indicators. If these indicators are degrading, then this identifies that the model cannot infer accurately enough in current environmental conditions. As a result, the model can be replaced, retrained, adapted, or a fallback algorithm may be used, i.e., in a reactive way. In the worst case the network can switch back to non-ML mode. The **downside** of such approach is that *(2) the poor performance of corresponding functionality will be observed for some time before the model can be taken out of use or updated.*

As shown in Fig. 1, the Model ID is characterised by static fields which are essentially hard-coded and contains information that can be publicly decoded. For an ML model the static part of the model ID allows the network to deploy the ML model and to switch between different ML models for different vendors. However, to assess the "validity" (or fitness of purpose) of the model, it is necessary to gather, store, share and interpret some additional information about the model, i.e., environment/input parameters in which the model was trained/validated/was supposed to/can be used. This "additional" information, referred as **Model Info, Context, or Metadata,** need to be discussed as well, as a logical mapping should be established with the Model ID described in Fig. 1. This information might be variable in size. Hence, it is recommendable to design a detailed architecture of Model Info to allow it to be optimally transferred in the wireless network, i.e., in between different types of network entities. This is comprehensive as transfer in wireless network here implies a) between network entities b) between the UE and the network and c) possibly between UE(s). Hence, **(3)** *how to extend model ID with additional information that can be transferred in between network entities and used for model validation?*

Additionally, some components of the ML Model Info need to be updated with time or depending on the geographical area where the model is used, even if the model (i.e., the functionality) is not changed.

The same models deployed on the same devices (e.g., the model with the same ID deployed on the UEs of the same model/chipset version/ from the same vendor) share similar behaviour and performance. On the other hand, the behaviour might differ in different areas, or depending on NW/gNB configuration. Therefore, **(4)** a *way to store, update and exchange dynamically* some *parts of Model Info based on model utilization should be provided.*

At the same time, the vendors are usually very cautious about sharing information with their potential competitors. Therefore, an additional aspect that need to be treated is **(5)** *how to ensure the Model Info transition and updates in a secure way?*

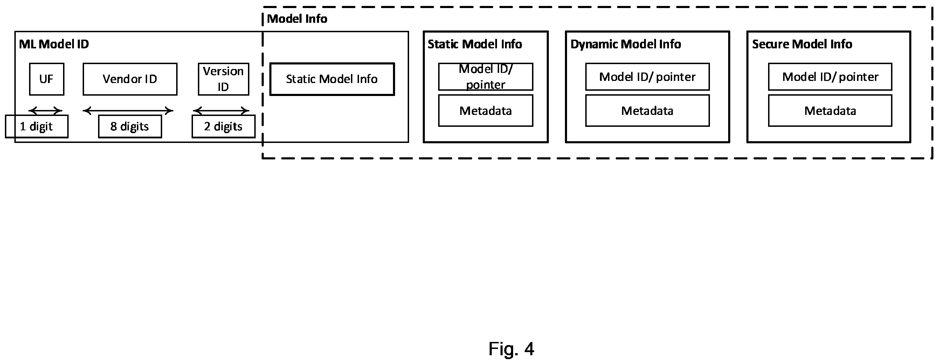

Some example embodiments provide a solution to at least one of items **(1)** to **(5).** Namely, some example embodiments provide an **(1) architecture for the ML Model Info** that is a variable size object and can be linked to the ML Model ID in a flexible manner. One example of the structure of the ML Model Info is shown in Fig. 4. The main components of the Model Info are
- **Static:** the part of the Model Info that is not supposed to change for a given Model ID. Some part of this information can be used as a part of Model ID.
- **Dynamic:** the part of the Model Info that can be updated during the model life cycle
- **Vendor-specific/Proprietary/Secure:** the part of the Model Info that contains information, which is specific to a particular vendor and requires encryption.

The purpose of the different components and some potential extensions introduced to ML Model Info are detailed further below (section A1).

Next, it is described how **(2) ML Model Info can be updated** (i.e., the dynamic part) **and transferred** in between network entities. ML Model Info can be updated based on the model utilization statistics collected either at the UE, or in the NW. The ML Model Info update requests can be initiated by the NW or UE, and the information can be transferred in between MLDB, UE(s), AMF/UMLCMF, and gNB, depending on the architecture of the solution. Model Info transfer can be initiated and limited in several different ways, and some example solutions are elaborated further below.

This disclosure provides several ways how **(3) ML Model Info can be used for ML model validation,** i.e., in a static/periodic manner, e.g., for initial/one-time model validation, or in more dynamic way for **(4) continuous ML model input data validation and predictive performance monitoring.** Corresponding message exchange and content are also disclosed.

### A.1 Model Info structure

**ML Model Info** is meta-data or context that can contain and indicate one or more of several types of information (pieces of information):
- architecture, number of layers, optimizer used, format of the model (PyTorch, TensorFlow etc.) of the ML Model
- network and/or UE parameters and/or radio conditions under which the model has been trained (e.g., FR1 or FR2, radio propagation model used for data collection, e.g., UMi (Urban Micro, see 3GPP TS 38.901), number of MIMO layers, antenna ports, etc.).
- structure of the underlying training data used (or of the typical input data) and its characterization, e.g., RSRP, RSRQ or SINR samples of a particular radio channel and some attributes e.g., the range of RSRP values and maybe parameters of the distribution of the data (e.g., mean and variance). It may also happen that a pointer (Data Set ID) may be placed to refer to a Data Set descriptor that describes a data set used for training (e.g., number of samples for training and validation, number of epochs, etc.).

There are several options for the format of ML Model Info, for example:
- Base it fully on some of the Open formats, e.g., ONNX
- Use a proprietary or newly defined format, potentially based on 3GPP agreements
- A combination of the approaches above, i.e., some of the parts may follow open format, whereas other parts may be newly defined by 3GPP or even be fully proprietary, i.e., used only by a particular vendor.

Furthermore, Model Info may be split into/contain three main types of information, as shown in Fig. 4**Error! Reference source not found.:**
- **Static:** the part of the Model Info that is static for a given Model ID and Version ID
   ∘ It still may change when Version ID of the model changes.
   ∘ Some limited parts of Model Info can be included as a part of Model ID, e.g., whether the model is two-sided or not, model architecture, etc.
   ∘ Other examples of Static Model Info: for example - a known Data Set ID or a descriptor of a known Data Set attribute. A proprietary data set identifier may also be referred to or the attributes of such data set may be stored in the static part of the ML Model Info.
- **Dynamic:** the part of the Model Info that can be updated during the model life cycle:
   ∘ This information can contain information about applicable conditions for the use of the model that can be updated based on the model utilization
      ▪ This information may also depend on the geographical location
      ▪ An example is the range of Reference Signal Received Power (RSRPs), Frequency offsets (FOs), delays, channel conditions, in where the model can be used and/or was designed to be used and/or has been used.
      ▪ The dynamic Model Info may contain some model performance aspects - e.g. how the ML model has performed over a period of time. For example, it may contain long-term averages of achieved performance, recent performance since the last restart of the ML model, what configuration of the ML model has worked well, etc..
   ∘ It is also understood that the Dynamic part of the Model Info may be involved in (or trigger) a feedback exchange of information between the transmitter and receiver.
- **Vendor-specific/Proprietary/Secure:** the part of the Model Info that contains information that is specific to a particular vendor or operator
   ∘ For example, even if the model is open, the usage experience of the model by different vendors or operators might be different, e.g., when the model is executed on different HardWare (HW) or chipset/system on chip (SOC).
   ∘ The proprietary part may be encrypted, so that this information would not be available to other vendors or operators.

In some example embodiments, ML model ID may comprise some data fields to indicate which of the information stored in the data structure is static, dynamic, or proprietary.

The above distinction into static model info and dynamic model info is just an example. As another example, the static model info is updated when the ML model is updated (like a software update). The dynamic model info is updated based on the execution of the ML model in run-time (inference) - e.g., by recording the performance aspects of the ML model. As another potential distinction, the dynamic model info may be deleted/updated by the UE or the network specifically when the ML model performance becomes better than previously recorded such that the parts that the bad performance KPI's could be updated or deleted with new performance information. In contrast, static model info would for example not see any updates due to changes in the underlying ML performance.

As another option, ML model info does not distinguish static model info and dynamic model info as different parts of the ML model info. Rather, for each piece of information, it is decided separately when and how it is updated.

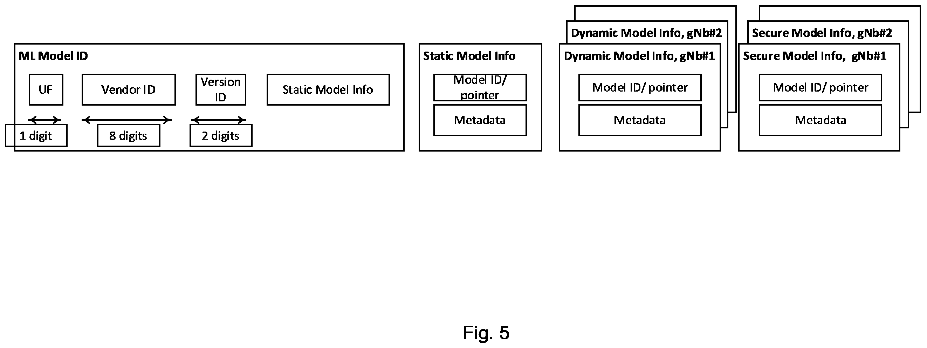

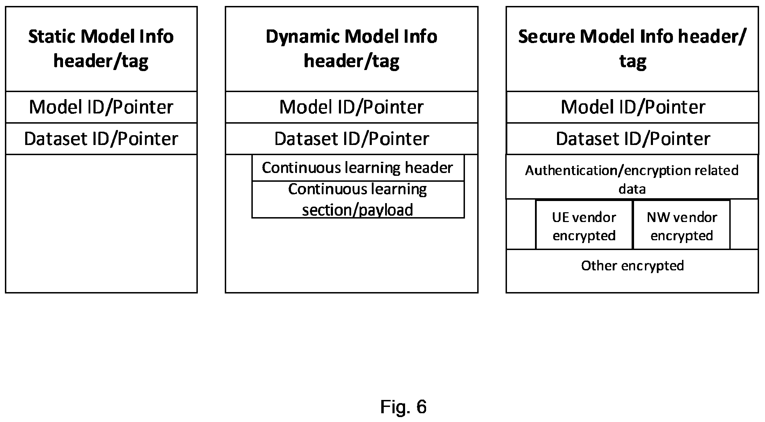

Additionally, ML Model Info may have one or more of the following extensions:
- The ML Model Info may have a **geographical indicator,** i.e., ML Model Info or at least one of its parts can be specific to a given gNB, group of gNBs, or geographical area, etc. Such Model Info structure is shown in the example of Fig. 5, where plural sets of the dynamic model info and the secure model info are available for different gNBs.
- For the models updated dynamically, e.g., for the models of online/reinforcement learning types, a change in Model Info can happen without explicit change in Model ID. Therefore, a section of **Dynamic Model Info can be dedicated for dynamic online learning updates** specifically (see Fig. 6).
- Model Info may support a **modular structure** so that only necessary or requested part of it is extracted and transferred. Such modular structure can be realized with section headers/tags or with hierarchical organization of the structure, e.g., with Yet Another Markup Language (YAML), Extensible Markup Language (XML), etc. An example of such a modular structure is shown in Fig. 6 (continuous learning header).
- Model Info may include some **additional pointers or identifiers (IDs),** such us ID of the data set used for model training or a data collection policy (describing, for example, one or more of a) the content of the data, b) the data size, c) latency and periodicity of sample collection, etc.),. If the model support continuous learning, then this ID is included in the Dynamic Model Info, otherwise it may be a part of Static Model Info (see Fig. 6, which comprises a dataset ID (pointer) in each of the static Model info, the dynamic Model info, and the secure Model info).
- Depending on the model type or inter-vendor (or inter-operator) information sharing agreement the Secure part can have several encrypted blocks, specific to a vendor or to different combinations of those (see Fig. 6 showing a part encrypted for the UE vendor and a part encrypted for the network vendor).

The Model info explained herein may be used in different scenarios, some of which are described in the following sections (not exhaustive).

A combination of the ML model ID and the ML model Info (such as the ones shown in Figs. 4 and 5) is also called a "data structure of the ML model". However, a "data structure of the ML model" is not limited to those of Figs. 4 and 5. Any data structure comprising the ML model ID and some metadata on the ML model may be considered as a "data structure of the ML model".

### A.2 Update and Transfer of Model Info

### Scenario 1: Update of dynamic information part of ML Model Info.

This scenario captures how the dynamic part of ML Model Info is updated and shared within the network. Network can further update this to the core network or a 3rd party server to be retrieved later for other UE(s) to allow (live) sharing of the ML Model Info.

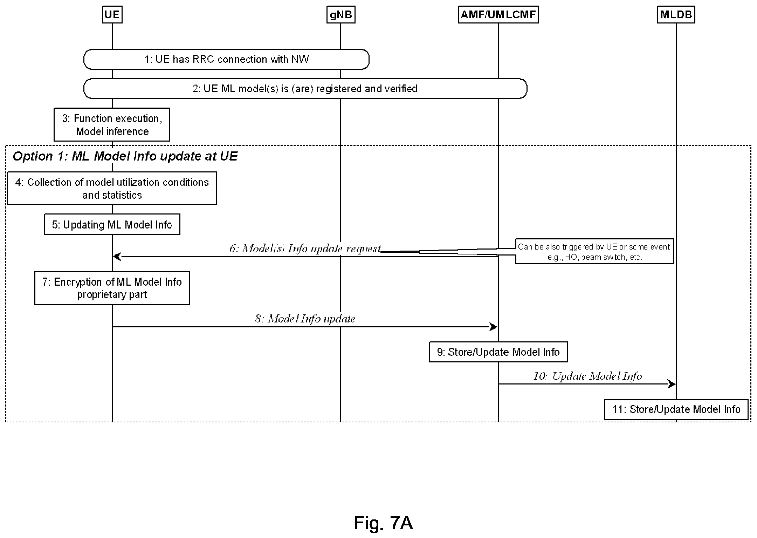

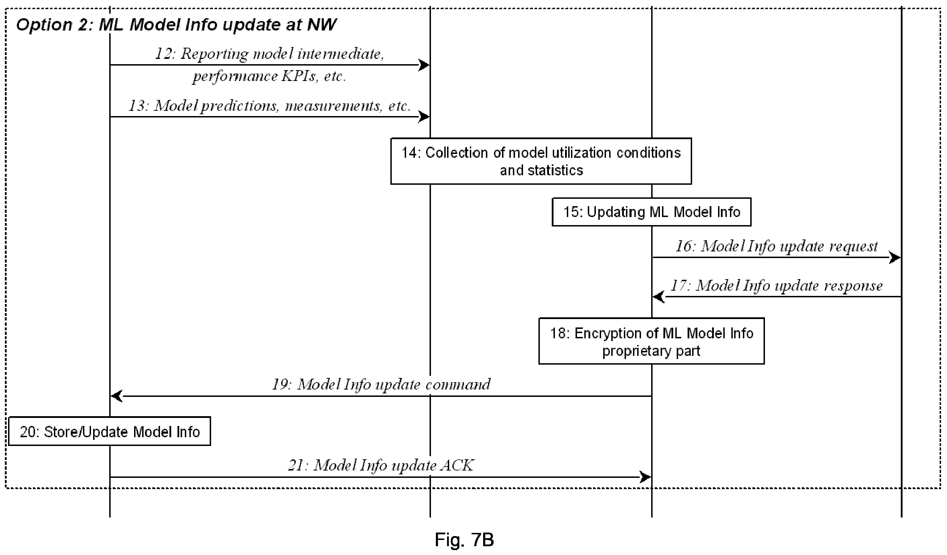

An example message flow of this scenario is shown in Fig. 7. The actions are as follows:
1-3: The initial setup for this scenario: UE has RRC connection with gNB, one or more UE models are registered and verified, UE executes the function model inference.

Fig. 7 comprises two options: Actions 4 to 11 illustrating the case that the ML model info update is performed at UE, and Actions 12 to 21 illustrating the case that the ML model info update is performed at the network. Typically, only one of these options is performed at a time.

### Option 1 (actions 4 to 11):

4: UE collects the conditions under which the ML model is used (such as radio conditions) and collects statistics, e.g. on the performance.

5: Based on the collected information of action 4, UE updates ML model info. In an example embodiment for the use case of beam management, UE may compare the ground truth (i.e., physical measurements performed over a set of SS/PBCH block indices or a set of CSI-RS resources) with the output of the ML model performing beam prediction in the time domain.

The comparison may result in a metric or a KPI that indicates how accurate the prediction is. In another example embodiment, the UE may record the latency of an inference or output once an input is given to a ML model. In yet another implementation, the UE may collect the physical resource usage (processing and memory) against the ML model configuration parameters.

6: At a certain point in time, AMF and/or UMLCMF (may be integrated) requests the UE to provide an update of the Model Info. As another option, UE may initiate the transfer for ML model info to AMF/UMLCMF.

7: If ML model info comprises an encrypted secure part (for example when the information contained in ML model info contains proprietary information), UE encrypts the updated secure part. For the encrypting, UE may use keys etc., which may AMF/UMLCMF may provide e.g. in Action 6 (or at any other suitable occasion).

8: UE provides the updated ML model info to AMF/UMLCMF. In some example embodiments, it provides only updated portions of ML model info. In some example embodiments, it provides the entire ML model info or at least some portion which has not been updated.

9: AMF/UMLCMF stores ML model info for its own purposes.

10 and 11: If a MLDB is implemented, AMF/UMLCMF may inform MLDB on the update, which updates its database accordingly. In some example embodiments, it provides only updated portions of ML model info. In some example embodiments, it provides the entire ML model info or at least some portion which has not been updated. The update to a database effects that information pertaining to a given ML Model ID lives past the lifetime of the UE connection in the network. I.e., even when the UE is not connected anymore to the network, the information about the ML model operation inside that UE persists in the network so that other UE(s) and the network may benefit from this.

### Option 2 (actions 12 to 21):

12 and 13: UE provides model intermediate (interim performance data; for example, such interim performance data could be periodically shared by the UE when configured with an ML model - the interim nature of the data allows the network to store the updates, collect them, and process them (for example based on a network preference, e.g. averaging formulae or weight based averaging formulae) and arrive at the final performance metric), performance KPls to be measured, model predictions (this is the model inference e.g., CSI prediction functionality in a given time window of 1 second into the future), and measurements to gNB.

14: From the information received in actions 12 and 13, gNB and/or AMF/UMLCMF collects the model utilization conditions and statistics.

15: Based on model utilization conditions and statistics, AMF/UMLCMF updates ML model info, similarly as it is done by the UE in action 5 of option 1.

16 and 17: If a MLDB is implemented, AMF/UMLCMF may inform MLDB on the update, which updates its database accordingly, similarly as described for actions 10 and 11 of option 1.

18: If ML model info comprises an encrypted secure part, AMF/UMLCMF encrypts the updated secure part.

19: AMF/UMLCMF requests UE to update model info. In some example embodiments, it provides only updated portions of ML model info. In some example embodiments, it provides the entire ML model info or at least some portion which has not been updated.

20 and 21: UE updates its model info, stores it and acknowledges the request of action 19.

In some example embodiments, the updating of actions 8, 10, 16 and 19 (or the corresponding request of action 6) may be performed periodically. The period may be different for the different parts of the model info. For example:
- Separate static configuration with periodicity T1, separate dynamic configuration with periodicity T1, separate vendor-specific configuration with periodicity T1
- Separate static configuration with periodicity T1, separate dynamic configuration with periodicity T2 separate vendor-specific configuration with periodicity T2
- Separate static configuration with periodicity T1, separate dynamic configuration with periodicity T2, separate vendor-specific configuration with periodicity T3
- Separate static configuration with periodicity T1, joint dynamic and vendor specific configuration with periodicity T1
- Separate static configuration with periodicity T1, joint dynamic and vendor specific configuration with periodicity T2
- In the above examples, aperiodic triggering may be used for any of the model components. Semi-persistent configuration is also possible.

As another option or in addition to the periodic update, some of the updates maybe performed event-based, such as when the UE performs a handover.

### Scenario 2: Update of vendor-specific/proprietary part and encryption of this part in ML Model Info.

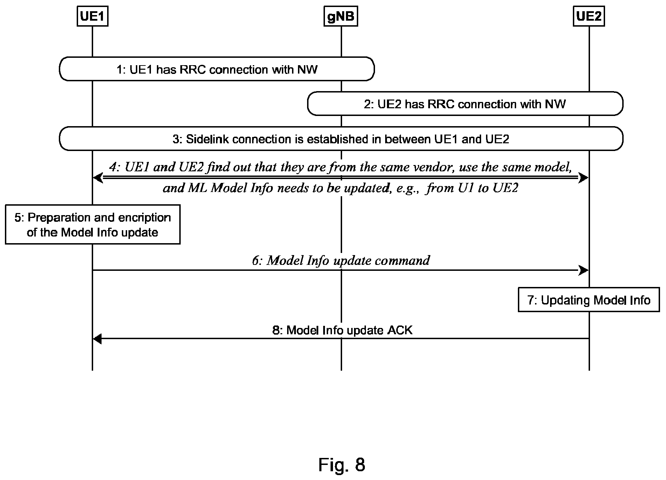

As shown in Fig. 7, the ML Model secure (proprietary) part may be encrypted. That is, the secure (proprietary) part of Model Info may be encrypted in a way that it can be decrypted only by the devices of this vendor. Hence, only a vendor specific key may be used to en/decrypt information. Fig. 8 shows another scenario, where two UEs exchange directly at least the secure part of the model info via sidelink. If the other UE is made by this vendor, too, it may utilize the model info received from the former UE.

The actions in Fig. 8 are as follows:
1 to 3: Both UEs have a RRC connection with the network and establish a sidelink connection directly between the UEs.

4: The UEs may check if one of the UEs has a newer version of ML model info. In the example of Fig. 8, UE1 has the newer version. Optionally, the UEs may check whether or not they are from the same vendor. In the example of Fig. 8, UE1 is of the same vendor as UE2.

5: Due to the positive checks of action 4, UE1 prepares the ML model info (or parts thereof) for transmission to UE2. In particular, it encrypts the secure part thereof.

6. UE1 sends model info update command to UE2 to update ML model info in UE2.

7 and 8: UE2 update ML model info and acknowledges the update command of action 6.

If the optional check for same vendor of action 4 is omitted, UE1 may nevertheless transmit ML model info or parts thereof to UE2. If UE2 is of another vendor, it cannot decrypt the secure part of ML model info. On the other hand, if it is checked that both UEs are of the same vendor, the encryption of the secure part may be omitted.

A network vendor specific key may be used for encrypting the Proprietary part of Model Info so that only network vendor can en/decrypt this information. For example, this encrypted information can be shared within the network between network nodes/entities from same vendor.

In a same cases, a UE and network vendor key pair may be defined, i.e., both UE vendor and network vendor can en/decrypt the data, if they agreed so.

As another option, a specific key can be defined for several vendors having a mutual agreement, so that only these network vendors can en/decrypt the information. For example, the information can be shared within the network and network nodes from these different vendors with agreement to share this information.

Encrypted parts of Model Info can be put under specific sub-containers in the Secure (Proprietary) part of model info. Two such containers are shown in Fig. 4, but the number is not limited to two (i.e. there may be more or less than two such containers).

### A.3 Model Verification/Validation with Model Info

### Scenario 3: A UE/network or both (for two-sided model) want to know if the ML model is suitable for its use.

To assess the suitability of the ML model in a specific scenario, the UE can request the network to provide the ML Model Info parts it is interested in and then make a decision to request the ML model transfer/delivery to the UE. Similarly, the network can take a ML model into use by making such a check for network specific ML model.

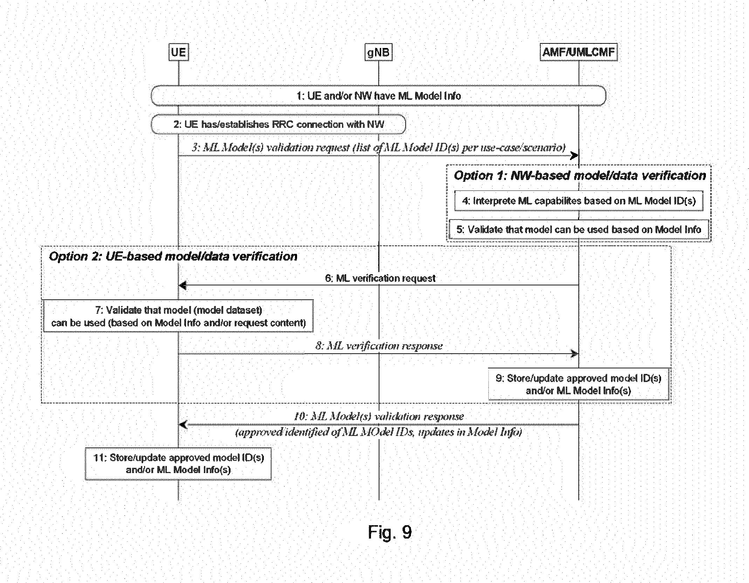

Note, that the UE/network can request to transmit full ML Model Info or a specific part of ML Model Info only, e.g. if the UE/network is only interested in a specific part. An example embodiment is explained in the signalling diagram of Fig. 9.

Fig. 9 comprises two options: Option 1 (actions 4 and 5) where the model/data verification is done by the network, and option 2 (actions 6 to 9) where the model/data verification is done by UE. Actions 1 to 3, 10, and 11 are common to both options. Typically, only one of the options 1 and 2 is performed at a time.

According to option 1 of Fig. 9, ML Model Info can be used as part of model (Model ID) **validation procedure at the NW** side. Using the same illustration as in Fig. 6, the Model Info may carry a Dataset ID which may be used for the model training. If the Dataset ID is provided in the static or dynamic part of the Model Info, the network can interpret the dataset related information from the Model Info. If the network has access to the dataset corresponding to the Dataset ID, the network may be able to perform dataset validation in Action 5. In one example of such validation process, the network can compare input data distribution of dataset corresponding to the Dataset ID with the input data distribution of the scenario/configuration where network plans to use the model. This type of model validation or dataset validation is possible if the static or dynamic parts of the Model Info comprise the related dataset information.

ML Model verification procedure can be illustrated in a situation when a UE connects (or makes a HandOver(HO)) to the gNB, and NW has information that the model (some of the models supported by the UE) does not perform well in the target gNB/group of gNBs/area. Then, the NW does not validate/configure/enable the use of such model.

In another example where a two-sided ML model is applied, NW has information in ML Model Info that a certain version of the portion of the ML Model (defined based on Model ID) deployed in UE demonstrates worse performance together with the current version of the ML model deployed in the network (identified by a NW Model ID) (e.g., two-sided CSI compression model). Hence, only a "good" one of the versions of the model requested by the UE should be validated/allowed by the NW.

According to option 2 of Fig. 9, a **UE may be configured/defined to perform a data verification/ML verification procedure** for a dataset prior to use a ML model/functionality associated with the dataset. For example, if the Model Info does not carry a Dataset ID in the static or dynamic part of the Model Info (e.g., may be carried within the encrypted part of the Model Info), the network may not be able to interpret the dataset related information from the Model info. To handle such cases, option 2 may be applied.

The actions in Fig. 9 are as follows:
1 and 2: Prerequisites - UE and/or network (depending on option 1 and 2) have ML model info and UE has established an RRC connection with the network.

3: UE sends a ML model validation request to the network (represented by AMF/UMLCMF). Along with this request, UE sends information on the scenario (or a use case) where UE intends to use the ML model.

### Option 1:

4: Network interprets the ML capabilities of the ML model based on ML model ID.

5: From a comparison of the intended scenario of action 3 and the ML capabilities obtained in action 4, network checks whether the ML model may be used in the scenario (M I model validation).

### Option 2:

- **Action 6:** When the data verification is to be applied at the UE, the UE may receive a request for data verification (according to a configuration of the dataset verification), where the request may be associated with a given ML model or Model functionality (identified by a functionality ID or use case/sub-use case/UE feature group (e.g. CSI or Positioning or Power Saving)).
   ∘ The request for dataset verification may indicate whether the data verification is applied for "input data", "output data", or both.
   ∘ The **request for dataset verification** may indicate boundaries/limits/range that data samples may need to satisfy in order to use the given ML model or Model functionality.
      ▪ In one example, for beam prediction in the spatial domain, the network may indicate the input L1-RSRP value range required to satisfy the dataset for a given ML model or Model functionality.
      ▪ In another example, for CSI compression, the network may indicate the configuration (e.g., Compression ratio boundaries) or parameters (e.g., antenna configurations) that is required to satisfy the dataset for a given ML model or Model functionality.
      ▪ In a further example, the request contains information about the range of input data/usage conditions in the format of Dynamic part of ML Model Info.
- **Action 7:** When UE receives the request for data verification, the UE may determine whether the dataset used for model training of the given ML model or model functionality is in line with the verification request received by the network.
   ∘ The ML Model verification can be based on ML Model Info stored at the UE.
   ∘ In data verification, UE may check the consistency of the data types as well as boundaries/ranges/limits indicated by the request message.
   ∘ In one example, the network indicates a range of RSRPs typical for the cell/gNB. If the ML Model is designed for such RSRP range (i.e., as the input to the model), then it will be validated, otherwise not.
   ∘ In one more example, for CSI compression, if ML Model at the UE is not compatible with the gNB or NW part of the ML Model (decoder) configuration identified in the request, then the model might not be validated.
- **Action 8:** The UE transmits a response to the data verification request, where it reports whether the dataset used for model training of the given ML model or model functionality is in line with the verification request received by the network.
   ∘ If the dataset is not in line with the boundaries/ranges/limits indicated by the network, the UE reports out-of-order data indication towards the network, and optionally indicates the possibility of applying a different ML model or model functionality in accordance with the requested boundaries/ranges/limits of the data.
   ∘ If the dataset is in line with the boundaries/ranges/limits indicated by the network, the UE reports in-order data indication towards the network.
   ∘ Additionally, in the response, the reason of the out-of-order can be indicated, e.g., with a reference of a filed violated in ML Model Info, and also updates to the dynamic parts of ML Model Info.
- **Action 9:** Network stores the approved model ID(s) and/or ML model info.

In both options 1 and 2 of Fig. 9, actions 10 and 11 may then follow:
10: The network replies to the validation request of action 3 with the result of the validation. The response may comprise the approved (validated) model ID and optionally an update of ML model info.

11: UE stores the approved model ID and/or ML model info.

### Scenario 4: Proactive ML model update/verification/validation (before UE downloads, or updates, or switches off ML model)

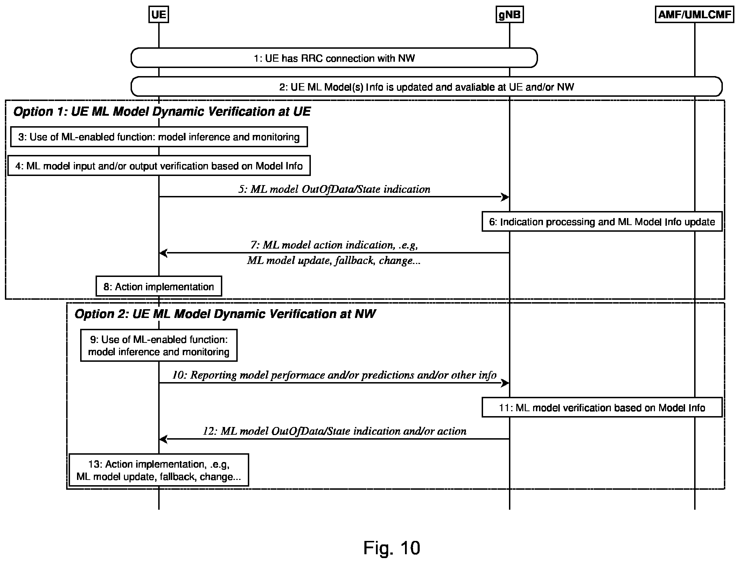

The ML Model Info enables a proactive approach, when the model is changed (or adjusted, or a fallback algorithm is used) already before the model starts to produce low-quality predictions or the performance of the dependent functionality is reduced. An example embodiment is shown in Fig. 10. Fig. 10 comprises two options: Input data verification can be done on the UE side (Option 1 in Fig. 10 comprising actions 3 to 8) or on the NW side (Option 2 in Fig. 10, comprising actions 9 to 13). Actions 1 and 2 are common to both options 1 and 2. Typically, only one of the options is performed at a time.

The actions in Fig. 10 are as follows:
1 and 2: Prerequisites - UE and/or network (depending on option 1 and 2) have ML model info and UE has established an RRC connection with the network (represented by AMF/UMLCMF).

### Option 1:

3: UE uses the ML-enabled function for model inference and monitors the performance.

4 and 5: The input to the ML model and/or the output from the ML model is verified based on the prediction contained in Model info. In the example of Fig. 10, it is assumed that one of the input or the output is out of the range for which the ML model is valid. For example, the ML model is designed for a certain RSRP range as input or output. If current RSRP goes below this level, then the UE can trigger Out_Of_Data State indication. Hence, UE sends to gNB a corresponding state indication ("ML model OutOfData").

6 and 7: The network processes the Out_Of_Data state indication. As a result, the network instruct the UE to perform some action, such as an update of the ML model, to switch to a fallback solution, or another change.

8: UE performs the action instructed by network in action 7.

### Option 2:

9: UE uses the ML-enabled function for model inference and monitors the performance.

10: Without verifying the input to the ML model and/or the output from the ML model, UE reports the model performance to the network. The information may also contain the predictions of the ML model (contained in ML model info), for example in a case that they are not available at the network.

11 and 12: Based on ML model info, network verifies the input data and/or the output data of the ML model. Here, it is assumed that at least one of the input data or the output data is out of the range for which the ML model is valid. Accordingly, network sends Out_Of_Data state indication to UE and instructs UE to perform an action, such as an update of the ML model, to switch to a fallback solution, or another change.

13: UE performs the action instructed by network in action 12.

Action 10 may also comprise an indication that the UE intends to perform a (conditional) handover to a new cell with different configuration that is not supported/expected by the model. Instead of providing this information from the UE to the network or in addition thereto, the network may retrieve this information from its own database.

The network may indicate (actions 7 and 12 of Fig. 10) the actions to be performed by the UE (actions 8 and 13 of Fig. 10) by a bit string, where each bit indicates the state of a specific function of the model itself. For example:
- First bit: The model can be substituted with another more appropriate model (where these models are indicated to the UE in different or same time instances)
- Second bit: The model adaptation process can be initiated
- Third bit: The model can be switched to the fallback algorithm
- Fourth bit: More detailed data collection can be initiated
- Fifth bit: Data collection/new measurements/filtering algorithms/etc. can be initiated to prepare for the change in the algorithm/model.

The above functionalities may be signalled independently or may be grouped together so that signalling savings may be achieved.

The data structure just organizes the information collected during different procedures (or scenarios) for a ML model during its life-cycle management. The data structure is not limited to the explained examples, as long as it contains corresponding information and enables the procedures explained hereinabove (i.e. collection of information on the ML model, storing the information, and reusing it again later for other UE(s). One may consider it as a sort of a federated approach to learn about the experience of UE(s) using a given ML model for a given use case so that the network and UE(s) can reuse the information and add/modify it suitably. Thus, over a period of time, the ML model info, when the ML model is executed (infers) in different UEs and network environments and deployment scenarios, will contain enough information for the ML model to be taken into use reliably - even ensuring good quality interoperability between UE vendors and network vendors. One may consider this approach as ML model "hardening".

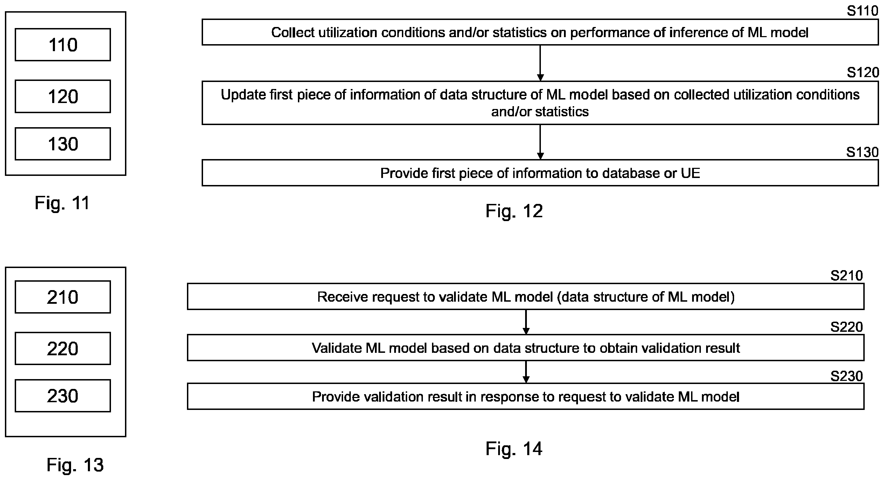

Fig. 11 shows an apparatus according to an example embodiment. The apparatus may be terminal (e.g. UE or loT device), or a base station (e.g. gNB or eNB), or an element of one of them. Fig. 12 shows a method according to an example embodiment. The apparatus according to Fig. 11 may perform the method of Fig. 12 but is not limited to this method. The method of Fig. 12 may be performed by the apparatus of Fig. 11 but is not limited to being performed by this apparatus.

The apparatus comprises means for collecting 110, means for updating 120, and means for providing 130. The means for collecting 110, means for updating 120, and means for providing 130 may be a collecting means, updating means, and providing means, respectively. The means for collecting 110, means for updating 120, and means for providing 130 may be a collector, updater, and provider, respectively. The means for collecting 110, means for updating 120, and means for providing 130 may be a collecting processor, updating processor, and providing processor.

The means for collecting 110 collects at least one of utilization conditions or statistics on performance of an inference of a ML model (S110). The means for updating 120 updates at least a first piece of information of a data structure of the ML model (comprising at least one of metadata of the ML model or context data of the ML model) based on at least one of the collected utilization conditions or the collected statistics ML model info) based on at least one of the collected utilization conditions or the collected statistics (S120). The means for providing 130 provides the at least first piece of information to at least one of a database (e.g. MLDB) or a terminal (e.g. UE) after the at least first piece of information has been updated (S130). The first piece of information may belong to the dynamic part of the ML model info data structure.

Fig. 13 shows an apparatus according to an example embodiment. The apparatus may be a network element (e.g. gNB or eNB, AMF, AMLCMF), or an element of one of them. Fig. 14 shows a method according to an example embodiment. The apparatus according to Fig. 13 may perform the method of Fig. 14 but is not limited to this method. The method of Fig. 14 may be performed by the apparatus of Fig. 13 but is not limited to being performed by this apparatus.

The apparatus comprises means for receiving 210, means for validating 220, and means for providing 230. The means for receiving 210, means for validating 220, and means for providing 230 may be a receiving means, validating means, and providing means, respectively. The means for receiving 210, means for validating 220, and means for providing 230 may be a receiver, validator, and provider, respectively. The means for receiving 210, means for validating 220, and means for providing 230 may be a receiving processor, validating processor, and providing processor.

The means for receiving 210 receives a request to validate a ML model (S210). The request comprises a data structure of the ML model (comprising at least one of metadata of the ML model or context data of the ML model) and an indication of a current condition under which inference by the ML model is to be executed.

The means for validating 220 validates the ML model based on the data structure and the current condition to obtain a validation result (S220). The means for providing 230 provides the validation result in response to the request of S210 to validate the ML model (S230).

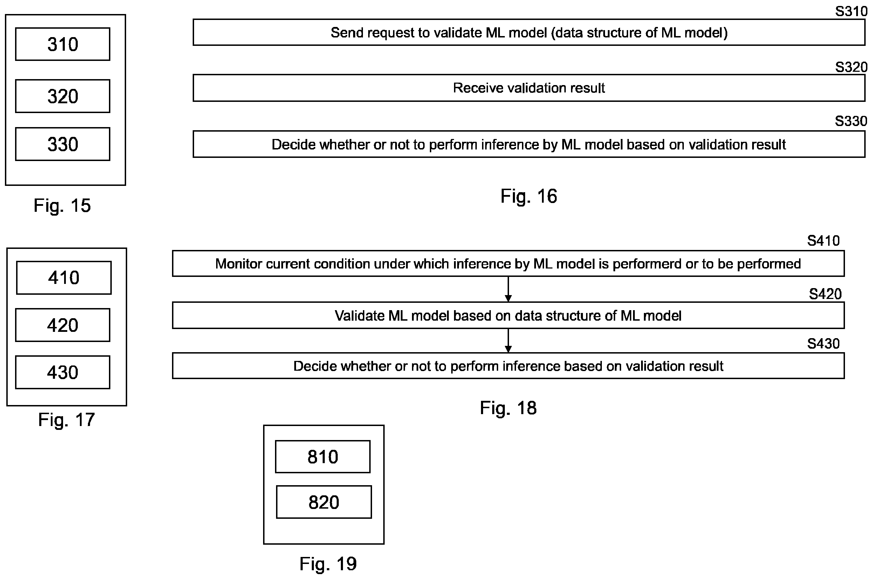

Fig. 15 shows an apparatus according to an example embodiment. The apparatus may be terminal (e.g. UE or loT device), or a base station (e.g. gNB or eNB), or an element of one of them. Fig. 16 shows a method according to an example embodiment. The apparatus according to Fig. 15 may perform the method of Fig. 16 but is not limited to this method. The method of Fig. 16 may be performed by the apparatus of Fig. 15 but is not limited to being performed by this apparatus.

The apparatus comprises means for sending 310, means for receiving 320, and means for deciding 330. The means for sending 310, means for receiving 320, and means for deciding 330 may be a sending means, receiving means, and deciding means, respectively. The means for sending 310, means for receiving 320, and means for deciding 330 may be a sender, receiver, and decider, respectively. The means for sending 310, means for receiving 320, and means for deciding 330 may be a sending processor, receiving processor, and deciding processor.

The means for sending 310 sends a request to validate a ML model (S310). The request comprises a data structure of the ML model (comprising at least one of metadata of the ML model or context data of the ML model) and an indication of a current condition under which inference by the ML model is to be executed. In response to the request to validate of S310, the means for receiving 320 receives a validation result (S320). The means for deciding 330 decides, based on the validation result of S320, whether or not to perform inference by the ML model (S330).

Fig. 17 shows an apparatus according to an example embodiment. The apparatus may be terminal (e.g. UE or loT device), or a base station (e.g. gNB or eNB), or an element of one of them. Fig. 18 shows a method according to an example embodiment. The apparatus according to Fig. 17 may perform the method of Fig. 18 but is not limited to this method. The method of Fig. 18 may be performed by the apparatus of Fig. 17 but is not limited to being performed by this apparatus.

The apparatus comprises means for monitoring 410, means for validating 420, and means for deciding 430. The means for monitoring 410, means for validating 420, and means for deciding 430 may be a monitoring means, validating means, and deciding means, respectively. The means for monitoring 410, means for validating 420, and means for deciding 430 may be a monitor, validator, and decider, respectively. The means for monitoring 410, means for validating 420, and means for deciding 430 may be a monitoring processor, validating processor, and deciding processor.

The means for monitoring 410 monitors a current condition under which inference by a ML model is performed or is to be performed (S410). The means for validating 420 validates the ML model based on a data structure of the ML model (comprising at least one of metadata of the ML model or context data of the ML model) and the current condition (S420). Thus, the means for validating 420 obtains a validation result. The means for deciding 430 decides, based on the validation result, whether or not to perform the inference by the ML model (S430).

Fig. 19 shows an apparatus according to an example embodiment. The apparatus comprises at least one processor 810, at least one memory 820 storing instructions that, when executed by the at least one processor 810, cause the apparatus at least to perform the method according to at least one of the following figures and related description: Fig. 12, or Fig. 14, or Fig. 16, or Fig. 18.

Some example embodiments are explained with respect to a 5G network. However, the invention is not limited to 5G. It may be used in other communication networks, too, e.g. in previous of forthcoming generations of 3GPP networks such as 4G, 6G, or 7G, etc.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality. The same applies correspondingly to the terminal.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example provide, for example, a terminal of a radio access network (such as a UE, a MTC device, etc.) or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments provide, for example, a base station (such as a gNB or eNB) or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example provide, for example, a database (such as a MLDB) or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments. However, it should be noted that the description of the preferred example embodiments is given by way of example only and that various modifications may be made without departing from the scope of the invention as defined by the appended claims.

The terms "first X" and "second X" include the options that "first X" is the same as "second X" and that "first X" is different from "second X", unless otherwise specified. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

## Claims

1. An apparatus, comprising:
means for receiving a request to validate a machine learning model, wherein the request comprises a data structure of the machine learning model and an indication of a current condition under which inference by the machine learning model is to be executed;
means for validating the machine learning model based on the data structure and the current condition to obtain a validation result; and
means for providing the validation result in response to the request to validate the machine learning model, wherein
the data structure of the machine learning model comprises at least one of metadata of the machine learning model or context data of the machine learning model.

2. The apparatus according to claim 1, wherein
the validating is performed without using the machine learning model.

3. The apparatus according to any of claims 1 and 2, further comprising:
means for providing at least one of an update of the data structure or an update of the machine learning model in response to the request to validate the machine learning model.

4. An apparatus, comprising:
means for sending a request to validate a machine learning model, wherein the request comprises a data structure of the machine learning model and an indication of a current condition under which inference by the machine learning model is to be executed;
means for receiving a validation result in response to the request to validate; and
means for deciding whether or not to perform inference by the machine learning model based on the validation result, wherein
the data structure of the machine learning model comprises at least one of metadata of the machine learning model or context data of the machine learning model.

5. The apparatus according to claim 4, further comprising:
means for inhibiting sending the machine learning model along with the data structure in the request to validate the machine learning model.

6. The apparatus according to any of claims 4 and 5, further comprising:
means for receiving at least one of an update of the data structure or an update of the machine learning model in response to the request to validate the machine learning model;
means for updating the at least one of the data structure and the machine learning model based on the received update; and
means for performing the inference by the machine learning model based on the updated at least one of the data structure and the machine learning model.

7. The apparatus according to any of claims 1 to 6, wherein the data structure of the machine learning model comprises
an identifier of a machine learning model, and at least one of the following:
- static information on the machine learning model;
- dynamic information on the machine learning model; or
- secure information on the machine learning model; wherein
the static information comprises at least one of the following:
- an indication of an architecture of the machine learning model;
- a number of layers of the machine learning model;
- an optimizer used to derive the machine learning model;
- an indication if the machine learning model is one-sided or two-sided;
- a format of the machine learning model;
- an indication on a condition under which the machine learning model was trained;
- an indication of training data used to train the machine learning model;
- a structure of the training data used to train the machine learning model; or
- a geographical location at which the machine learning model was trained;
the dynamic information comprises at least one of the following:
- the indication on the condition under which the machine learning model was trained;
- the indication of the training data used to train the machine learning model;
- the structure of the training data used to train the machine learning model; or
- the geographical location at which the machine learning model was trained;
the secure information comprises at least one of the following:
- a usage experience of the machine learning model; or
- a dependence of the user experience on a hardware or a chipset or a system on chip.

8. The apparatus according to claim 7, wherein at least one of the following:
the condition under which the machine learning model was trained comprises at least one of the following: a network at which the machine learning model was trained; a radio parameter under which the machine learning model was trained; a radio condition under which the machine learning model was trained; or a parameter of a terminal under which the machine learning model was trained; or
the structure of the training data used to train the machine learning model comprises at least one of the following: an input parameter of the machine learning model; a range of values of the input parameter in the training data; or a distribution of the values of the input parameter in the training data; or
the secure information is encrypted in the data structure.

9. A method, comprising:
collecting at least one of utilization conditions or statistics on performance of an inference of a machine learning model;
updating at least a first piece of information of a data structure of the machine learning model based on at least one of the collected utilization conditions or the collected statistics; and
providing the at least first piece of information to at least one of a database or a terminal after the at least first piece of information has been updated, wherein
the data structure of the machine learning model comprises at least one of metadata of the machine learning model or context data of the machine learning model.

10. A method, comprising:
receiving a request to validate a machine learning model, wherein the request comprises a data structure of the machine learning model and an indication of a current condition under which inference by the machine learning model is to be executed;
validating the machine learning model based on the data structure and the current condition to obtain a validation result; and
providing the validation result in response to the request to validate the machine learning model, wherein
the data structure of the machine learning model comprises at least one of metadata of the machine learning model or context data of the machine learning model.

11. A method, comprising:
sending a request to validate a machine learning model, wherein the request comprises a data structure of the machine learning model and an indication of a current condition under which inference by the machine learning model is to be executed;
receiving a validation result in response to the request to validate; and
deciding whether or not to perform inference by the machine learning model based on the validation result, wherein
the data structure of the machine learning model comprises at least one of metadata of the machine learning model or context data of the machine learning model.

12. A method, comprising:
monitoring a current condition under which inference by a machine learning model is performed or is to be performed;
validating the machine learning model based on a data structure of the machine learning model and the current condition to obtain a validation result; and
deciding whether or not to perform the inference by the machine learning model based on the validation result, wherein
the data structure of the machine learning model comprises at least one of metadata of the machine learning model or context data of the machine learning model.

13. The method according to any of claims 9 to 12, wherein the data structure of the machine learning model comprises
an identifier of a machine learning model, and at least one of the following:
- static information on the machine learning model;
- dynamic information on the machine learning model; or
- secure information on the machine learning model; wherein
the static information comprises at least one of the following:
- an indication of an architecture of the machine learning model;
- a number of layers of the machine learning model;
- an optimizer used to derive the machine learning model;
- an indication if the machine learning model is one-sided or two-sided;
- a format of the machine learning model;
- an indication on a condition under which the machine learning model was trained;
- an indication of training data used to train the machine learning model;
- a structure of the training data used to train the machine learning model; or
- a geographical location at which the machine learning model was trained;
the dynamic information comprises at least one of the following:
- the indication on the condition under which the machine learning model was trained;
- the indication of the training data used to train the machine learning model;
- the structure of the training data used to train the machine learning model; or
- the geographical location at which the machine learning model was trained;
the secure information comprises at least one of the following:
- a usage experience of the machine learning model; or
- a dependence of the user experience on a hardware or a chipset or a system on chip.

14. The method according to claim 13, wherein at least one of the following:
the condition under which the machine learning model was trained comprises at least one of the following: a network at which the machine learning model was trained; a radio parameter under which the machine learning model was trained; a radio condition under which the machine learning model was trained; or a parameter of a terminal under which the machine learning model was trained; or
the structure of the training data used to train the machine learning model comprises at least one of the following: an input parameter of the machine learning model; a range of values of the input parameter in the training data; or a distribution of the values of the input parameter in the training data; or
the secure information is encrypted in the data structure.

15. A computer readable medium comprising program instructions that, when executed by an apparatus, cause the apparatus to perform the method according to any of claims 9 to 14.
